Europäisches Patentamt

**European Patent Office**

**Office européen des brevets**

(11) Numéro de publication: **0 028 974**

**A1**

(12) # DEMANDE DE BREVET EUROPEEN

(21) Numéro de dépôt: **80401579.0**

(51) Int. Cl.³: **B 29 D 11/00**

(22) Date de dépôt: **05.11.80**

(30) Priorité: **08.11.79 FR 7927529**

(43) Date de publication de la demande:
**20.05.81 Bulletin 81/20**

(84) Etats Contractants Désignés:
**BE CH DE GB IT LI NL SE**

(71) Demandeur: **ESSILOR INTERNATIONAL Cie Générale d'Optique**
**1 Rue Thomas Edison Echat 902**
**F-94028 Creteil Cedex(FR)**

(72) Inventeur: **Legendre, Serge**
**19, Rue du Cap**
**F-94000 Creteil(FR)**

(74) Mandataire: **CABINET BONNET-THIRION**
**95 Boulevard Beaumarchais**
**F-75003 Paris(FR)**

(54) **Procédé pour la réalisation d'un verre composite, et verre composite, en particulier lentille ophtalmique, ainsi obtenu.**

(57) Il s'agit de la réalisation d'un verre composite (10) à partir d'une ébauche stratifiée (14) comportant par exemple une couche intermédiaire en matière organique (12) entre deux coquilles en matière minérale (E'A.E'B).

Suivant l'invention, on usine la surface externe des coquilles en matière minérale (11'A,11'B) jusqu'à assurer à celles-ci une réduction d'épaisseur au centre au moins égale à la moitié de leur épaisseur initiale.

Application notamment à la réalisation de lentilles ophtalmiques composites.

./...

EP 0 028 974 A1

Croydon Printing Company Ltd.

## FIG.3D

1

<u>Procédé pour la réalisation d'un verre composite,</u> et verre composite, <u>en particulier lentille ophtalmique,</u> ainsi obtenu

La présente invention concerne d'une manière générale les verres composites, c'est-à-dire les verres réalisés partie en matière minérale, partie en matière organique.

Elle vise plus particulièrement, mais non exclusivement les lentilles ophtalmiques, c'est-à-dire les lentilles destinées à l'équipement d'une monture de lunettes, qu'il s'agisse de lentilles correctrices, ou qu'il s'agisse de simples lentilles afocales dites solaires.

Traditionnellement, les lentilles ophtalmiques sont réalisées en matière minérale, du type de celles obtenues par fusion d'un sable siliceux et de carbonates, communément dites verres, à partir d'un palet en une telle matière, convenablement moulé, à chacune des faces duquel il est appliqué un usinage comportant généralement trois phases successivement d'ébauchage, de doucissage, et de polissage.

Les techniques nécessaires à la mise en oeuvre d'un tel usinage sont actuellement parfaitement maîtrisées, et ne soulèvent aucune difficulté, quelle que soit l'épaisseur de matière à enlever.

Les lentilles ophtalmiques en matière minérale ont l'avantage d'une bonne résistance aux rayures, en raison de leur dureté.

Elles se prêtent en outre avantageusement à l'incorporation en leur sein de pigments photochromiques.

Parallèlement à de telles lentilles ophtalmiques en matière minérale, il s'est développé depuis déjà de nombreuses années la réalisation de lentilles ophtalmiques en matière organique, traditionnellement obtenues directement à la forme désirée par moulage d'une telle matière entre deux coquilles en matière minérale surfacées en conséquence par usinage.

Les lentilles ophtalmiques en matière organique ont pour elles l'avantage de la légèreté.

Mais elles présentent des inconvénients, et, notamment, une certaine sensibilité aux rayures, leur dureté étant relativement médiocre.

De nombreuses tentatives ont été faites ces dernières années pour améliorer cette dureté.

Par exemple, il a été proposé de déposer à leur surface une couche de silice par évaporation sous vide d'une telle silice.

Mais il s'agit là d'un procédé complexe et onéreux à mettre en oeuvre.

De même, divers essais ont été faits pour l'incorporation de pigments photochromiques à des lentilles en matière organique.

Mais ceux-ci n'ont pas encore abouti à ce jour à des réalisations pratiques valablement commercialisables, en raison notamment d'une durée de vie insuffisante dans ce cas pour les pigments photochromiques.

Il est connu par ailleurs des lentilles ophtalmiques de nature composite, réalisées partie en matière minérale et partie en matière organique.

C'est le cas par exemple de celles faisant l'objet du brevet français déposé le 30 Octobre 1978 sous le N°78 30726 et publié sous le N° 2.407.898 ; mais ces lentilles ophtalmiques ne comportent qu'une pellicule de matière minérale, sur une seule des faces de la masse de matière organique associée, en sorte que l'autre des faces de celles-ci reste sensible aux rayures.

C'est le cas également de certaines lentilles ophtalmiques de sécurité formées de deux coquilles en matière minérale liées l'une à l'autre par un feuillet intermédiaire en matière organique mis en forme entre ces coquilles lors du montage de l'ensemble.

Dans une telle lentille ophtalmique, celles des surfaces des coquilles en matière minérale qui se trouvent dirigées l'une vers l'autre ont la même courbure, le feuillet en matière synthétique intermédiaire n'ayant qu'une épaisseur réduite, suffisante pour assurer la liaison recherchée de ces coquilles, et éviter par cette liaison, en cas de bris, le départ d'éclats dangereux.

Autrement dit, bien que les coquilles en matière minérale en question puissent après leur assemblage être l'objet d'un usinage, elles constituent conjointement l'essentiel de la lentille ophtalmique à la constitution de laquelle elles participent, leur usinage se réduisant en pratique à un simple surfaçage propre à rectifier, si nécessaire, leur surface externe, et ce surfaçage n'impliquant qu'un enlèvement de matière modéré.

Il en résulte qu'elles sont lourdes.

Ceci étant exposé, la présente invention a d'une manière générale pour objet un procédé propre à la réalisation d'un verre composite, et notamment d'une lentille ophtalmique composite, du genre suivant lequel on assure d'abord la formation d'une ébauche stratifiée comportant successivement une première couche en matière minérale, puis une deuxième couche en matière organique, et on procède ensuite à un usinage de la surface externe de la couche en matière minérale, ce procédé étant caractérisé en ce qu'on donne à la couche en matière organique de l'ébauche une épaisseur au centre au moins égale à la moitié de celle désirée pour le verre composite recherché, et en ce que l'on pousse l'usinage de la surface externe de la couche en matière minérale jusqu'à assurer à celle-ci une réduction d'épaisseur notable désirée.

Elle a encore pour objet le verre composite, par exemple une lentille ophtalmique, obtenu en application d'un tel procédé.

De préférence, la réduction d'épaisseur appliquée par usinage à la couche en matière minérale est au moins égale à la moitié de l'épaisseur au centre initiale de cette couche, voire supérieure.

De préférence également, notamment lorsqu'il s'agit d'une lentille ophtalmique, mais non nécessairement l'ébauche stratifiée de départ comporte une troisième couche, qui est une deuxième couche en matière minérale, en sorte que la couche de matière organique y est disposée en sandwich entre deux couches en matière minérale, et, si désiré, mais non nécessairement, il est également appliqué par usinage à cette deuxième couche en matière minérale une réduction d'épaisseur, l'amplitude de celle-ci pouvant dans ce cas être égale à celle appliquée à la première ou différente de celle-ci.

Quoi qu'il en soit, prenant le contre-pied de la démarche usuelle de l'homme de l'art qui, confronté au problème consistant à former une couche en matière minérale à la surface d'une couche en matière organique, pense normalement à satisfaire à ce problème par un apport de matière minérale, comme c'est par exemple le cas de ce qui est réalisé par évaporation sous vide de silice, l'invention propose au contraire d'assurer la formation d'une telle couche par enlèvement de matière, un tel enlèvement de matière n'impliquant avantageusement la mise en oeuvre que d'une technique banale d'usinage.

N'importe quelle matière organique transparente propre à adhérer à la matière minérale mise en oeuvre soit par elle-même, soit par incorporation d'un quelconque additif, soit encore par collage, peut convenir.

Il peut s'agir par exemple d'une matière organique susceptible d'une mise en place par formage entre les coquilles en verre minéral concernées.

Mais, dans le cas où deux couches de matière minérale sont prévues, il peut s'agir également d'une matière organique susceptible d'être moulée, coulée ou injectée in situ entre deux coquilles en matière minérale, et d'y être polymérisée, en prenant directement pour coquilles de moulage des coquilles en matière minérale aptes à donner naissance par usinage aux couches en matière minérale recherchées, en sorte que, suivant l'invention, ces coquilles en matière minérale font office de coquilles de moulage perdues dans le processus de réalisation suivant l'invention du verre composite à obtenir.

Les techniques de moulage à mettre en oeuvre à ce sujet sont également à ce jour bien maîtrisées.

De préférence, cependant, la matière organique polymérisable à mouler choisie est une matière organique capable de polymérisation sans retrait, pour éviter le développement de contraintes.

Quoi qu'il en soit, la présente invention associe de manière particulièrement simple et avantageuse, pour l'obtention d'un verre composite, et, par exemple, d'une lentille ophtalmique composite, deux techniques connues en elles-mêmes, bien maîtrisées, et faciles à mettre en oeuvre, l'une de moulage, ou de formage, l'autre d'usinage.

Ce résultat est d'autant plus remarquable que l'homme de l'art confronté avec le problème, considéré jusqu'à ce jour ardu à surmonter, de la réalisation d'une lentille ophtalmique composite, avait nécessairement connaissance de l'une et l'autre de ces techniques depuis de nombreuses années, sans que leur association n'ait été jusqu'à ce jour envisagée.

L'homme de l'art avait également connaissance, sans y avoir jusqu'à ce jour vu une quelconque orientation dans la solution du problème posé par la réalisation d'une lentille ophtalmique composite, des lentilles ophtalmiques de sécurité comportant deux coquilles en matière minérale réunies par un feuillet intermédiaire en matière organique.

Mais rien dans ces réalisations connues, qui n'impliquaient au mieux qu'un enlèvement modéré de matière à la surface de ces coquilles en matière minérale par surfaçage, ne pouvait normalement lui suggérer de pousser l'usinage correspondant jusqu'à une élimination quasi totale de l'une et/ou de l'autre de ces coquilles, le feuillet en matière synthétique intermédiaire n'ayant pas par lui-même une épaisseur suffisante pour permettre un tel traitement et n'ayant pour seule fonction que d'assurer la solidarisation entre elles desdites coquilles.

En effet, et il s'agit là d'une caractéristique de l'invention, l'épaisseur au centre de la couche en matière organique d'une lentille ophtalmique composite suivant l'invention est au moins égale à la moitié de son épaisseur au centre totale, alors que tel n'est pas le cas pour le feuillet intermédiaire en matière organique des lentilles ophtalmiques de sécurité du genre concerné.

En outre, à la différence de ces dernières, une lentille ophtalmique composite suivant l'invention se prête avantageusement à des réalisations dans lesquelles les surfaces internes des couches en matière minérale ont des géométries différentes l'une de l'autre, ou, d'une manière plus générale, assurent des fonctions de filtration, et/ou de correction et/ou de photochromisme, différentes l'une de l'autre.

Quoi qu'il en soit, une lentille ophtalmique composite suivant l'invention associe avantageusement les avantages de légèreté de la matière organique, celle-ci en formant l'essentiel, aux avantages de dureté de la matière minérale, celle-ci étant présente à la surface de la matière organique.

Et, en outre, l'une des couches en matière minérale qu'elle comporte peut avantageusement, si désiré, être additionnée de pigments photochromiques.

Enfin, une lentille ophtalmique suivant l'invention peut avantageusement constituer par elle-même un produit semifini, susceptible d'être à la demande l'objet d'un usinage propre à la rendre conforme à de quelconques prescriptions de correction spécifiques demandées.

Les objets de l'invention, ainsi que leurs caractéristiques et leurs avantages, ressortiront d'ailleurs de la description qui va suivre, à titre d'exemple, en référence aux dessins schématiques annexés sur lesquels :

la figure 1 est une vue en coupe axiale d'une lentille ophtalmique composite suivant l'invention ;

la figure 2 reprend à échelle supérieure le détail de la figure 1 reporté par un encart II sur celle-ci ;

les figures 3A, 3B, 3C, 3D sont des vues en coupe axiale illustrant un procédé de réalisation suivant l'invention d'une telle lentille ophtalmique composite selon diverses phases successives de mise en oeuvre de ce procédé ;

les figures 4 à 11 sont, à échelle inférieure, des vues analogues à celle de la figure 1 et concernent chacune respectivement une variante d'application.

Ces figures illustrent à titre d'exemple l'application de l'invention à la réalisation d'une lentille ophtalmique composite 10.

Par lentille ophtalmique on entend ici un palet, en général à contour circulaire, tel qu'obtenu au terme du procédé de réalisation correspondant, avant le détourage qu'il est nécessaire d'appliquer à ce palet pour son adaptation au cercle de monture de lunettes qu'il doit équiper.

Dans la forme de réalisation représentée sur les figures, la lentille ophtalmique 10 suivant l'invention comporte successivement une première couche en matière minérale 11A, une couche intermédiaire en matière organique 12, et une deuxième couche en matière minérale 11B.

Suivant l'invention, l'épaisseur au centre $E_I$ de la couche intermédiaire en matière organique 12 est au moins égale à la moitié de l'épaisseur au centre E totale de la lentille ophtalmique concernée.

Conjointement, les épaisseurs au centre $E_A$ et $E_B$ des couches en matière minérale 11A,11B ne sont que des fractions de l'épaisseur au centre totale E, et, en pratique, ne sont également que des fractions de l'épaisseur au centre $E_I$ de la couche intermédiaire en matière organique 12.

Par exemple, mais il va de soi que le domaine d'application de l'invention n'est pas limité à cet exemple, l'épaisseur au centre totale E de la lentille peut être de l'ordre de 1,5 mm à 3 mm, l'épaisseur au centre $E_I$ de la couche intermédiaire en matière organique 12 peut être de l'ordre de 1 à 2,5 mm, et les épaisseurs au centre $E_A$ et $E_B$ des couches en matière minérale 11A,11B peuvent être de l'ordre de 0,1 à 0,5 mm, sans qu'il soit nécessaire d'ailleurs que ces épaisseurs au centre $E_A$, $E_B$ soient égales entre elles, de telles épaisseurs $E_A$, $E_B$ pouvant au contraire être différentes l'une de l'autre.

N'importe quelle matière organique peut convenir à la réalisation de la couche intermédiaire 12, une telle matière organique devant cependant être choisie d'une part pour être transparente et d'autre part pour adhérer à la matière minérale mise en oeuvre soit par elle-même soit à l'aide d'un additif approprié soit encore par collage.

De préférence, cependant, il s'agit d'une matière organique capable de polymérisation sans retrait.

Les matières organiques thermo-durcissables peuvent par exemple convenir, et notamment les polyuréthannes, les résines époxy, les polyesters, et les résines allyliques, additionnées par exemple d'un catalyseur propre à en provoquer la polymérisation.

Mais les matières organiques thermo-plastiques peuvent également convenir, et notamment les polyméthylmétacrylates et les polycarbonates.

De telles matières organiques peuvent être mises en oeuvre par moulage, notamment par moulage par injection ou par compression, ou par formage.

L'indice de réfraction de la matière organique mise en oeuvre peut, ou non, être égal, ou proche, de celui de la matière minérale mise en oeuvre par ailleurs.

Avec les matières organiques mentionnées ci-dessus, un tel indice de réfraction peut se situer entre 1,35 et 1,7 par exemple, suivant la nature de ces matières organiques.

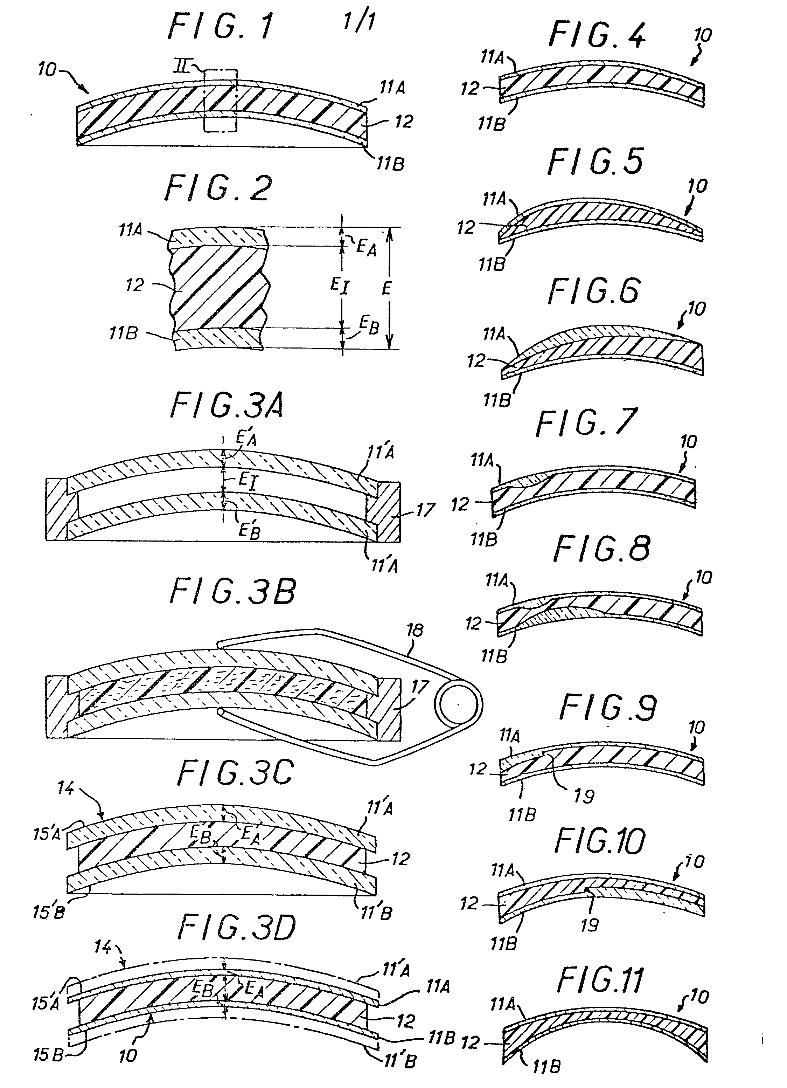

D'une manière générale, pour la réalisation d'une lentille ophtalmique composite 10 du type de celle décrite ci-dessus on assure d'abord la formation d'une ébauche stratifiée 14, figure 3C, comportant successivement une première couche en matière minérale 11'A, une couche intermédiaire en matière organique 12, et une deuxième couche en matière minérale 11'B, et on procède ensuite à un usinage de la surface externe 15'A,15'B de l'une au moins des couches en matière minérale 11'A,11'B, et en pratique de chacune de celles-ci.

Suivant l'invention, et tel qu'illustré par les figures 3C et 3D, on pousse cet usinage jusqu'à assurer aux couches en matière minérale 11'A,11'B une réduction d'épaisseur notable désirée.

Par exemple, cette réduction d'épaisseur est au moins égale à la moitié de l'épaisseur au centre initiale $E'_A, E'_B$.

De préférence, elle est au moins égale aux trois quarts de l'épaisseur au centre initiale $E'_A, E'_B$.

En pratique, et tel que schématisé en traits interrompus à la figure 3D, cette réduction d'épaisseur est suffisante pour que l'épaisseur subsistante des couches 11'A,11'B travaillées soit celle $E_A, E_B$ des couches 11A,11B recherchées, celles-ci étant ainsi issues des précédentes par enlèvement de matière.

Par exemple, les réductions d'épaisseur au centre ainsi appliquées aux couches en matière minérale 11'A,11'B de l'ébauche stratifiée 14 sont semblables, un usinage de même type étant appliqué aux surfaces externes de l'une et de l'autre de ces couches 11'A,11'B.

Un tel usinage relève d'une technique connue, et ne sera pas décrit en détail ici.

Quoi qu'il en soit, les surfaces travaillées sont des surfaces de révolution ou non.

Comme mentionné ci-dessus, la couche en matière organique 12 peut être mise en place par formage entre les couches en matière minérale 11'A,11'B initiales, avant usinage de celles-ci.

Mais, la matière organique constitutive d'une telle couche intermédiaire 12 étant apte à être moulée, on assure de préférence in situ, suivant l'invention, le moulage et la polymérisation de cette couche en matière organique, en prenant directement pour coquilles de moulage les couches en matière minérale 11'A,11'B à lui associer.

Les techniques de moulage et de polymérisation correspondantes sont elles-mêmes bien connues.

Tel que schématisé par les figures 3A,3B, elles consistent par exemple à mettre en oeuvre un moule formé de coquilles 11'A,11'B et d'un joint annulaire 17 maintenant à distance l'une de l'autre ces coquilles à leur périphérie, suivant l'épaisseur au centre $E_I$ recherchée pour la couche intermédiaire 12 à former, figure 3A, à introduire entre les coquilles 11'A,11'B, par écartement de l'une d'entre elles, la masse de matière organique à polymériser, additionnée du catalyseur de polymérisation correspondant, et à soumettre l'ensemble à un traitement, par exemple thermique, propre à initier la polymérisation recherchée, les coquilles 11'A,11'B étant, si nécessaire, maintenues en place par une pince élastique 18 agissant sur leur surface externe figure 3B.

Si désiré, des dispositions peuvent être adoptées pour favoriser une bonne adhérence de la matière organique mise en oeuvre aux coquilles de matière minérale au contact desquelles elle se trouve ; par exemple, des additifs appropriés peuvent être ajoutés à cette matière organique ; en variante, les coquilles en matière minérale peuvent faire l'objet d'une préparation de surface spéciale.

Après polymérisation de la matière organique formant la couche intermédiaire 12, la pince 18 et le joint annulaire 17 sont retirés, figure 3C, laissant subsister l'ébauche stratifiée 14 recherchée.

Il suffit ensuite, pour obtenir la lentille ophtalmique composite 10 recherchée, de procéder à l'usinage des coquilles 11'A,11'B de cette ébauche, comme décrit ci-dessus, figure 3D, et d'éliminer les bords débordant des couches en matière minérale 11A,11B obtenues au terme d'un tel usinage.

On a supposé, sur les figures 1 à 3, que la lentille ophtalmique composite 10 concernée était une simple lentille afocale, les surfaces des couches en matière minérale 11A, 11B qu'elle comporte étant parallèles, et lesdites couches étant parallèles entre elles.

Mais, en variante, figures 4 à 11, il peut s'agir de lentilles ophtalmiques correctrices, et par exemple de lentilles progressives, figures 4 à 6, d'une lentille bifocale, figure 7, d'une lentille trifocale, figure 8, ou de lentilles dites "exécutives", c'est-à-dire de lentilles possédant transversalement une arête 19, figures 9 et 10.

Il ne s'agit pas non plus nécessairement de lentilles convergentes ; il peut en effet s'agir aussi bien de lentilles divergentes, figure 11.

Les corrections recherchées peuvent être assurées par la géométrie de l'une et/ou de l'autre des surfaces interne ou bien externe de l'une et/ou de l'autre des couches en matière minérale 11A,11B, qui, si désiré, peuvent avoir des indices différents ; en variante, une telle correction peut être obtenue en tout ou partie par mise en oeuvre, pour le remplissage à effectuer entre les couches en matière minérale 11A,11B, de matières organiques différentes, implantées dans des zones différentes d'un tel remplissage.

De préférence, cependant, seule la surface interne de ces couches de matière minérale participe à la correction recherchée, leur surface externe étant par exemple sphérique ou torique.

Ainsi qu'on le notera, et suivant une caractéristique de l'invention, les surfaces internes des couches en matière minérale 11A,11B peuvent d'ailleurs, si désiré, avoir des géométries différentes l'une de l'autre.

D'une manière plus générale, ces couches en matière minérale peuvent assurer, si désiré, des fonctions de filtration et/ou de correction, et/ou de photochromisme différentes l'une de l'autre.

Par exemple, qu'il s'agisse de lentilles ophtalmiques afocales ou de lentilles ophtalmiques de correction, la couche de matière minérale 11A située en avant peut être additionnée de pigments photochromiques, et/ou la couche de matière minérale 11B située à l'arrière être additionnée de pigments propres à assurer une quelconque filtration.

Dans tous les cas également, la matière organique constitutive de la couche intermédiaire 12 peut, si désiré, être teintée.

De plus, dans tous les cas également, il est possible, si désiré, d'inclure dans la matière organique mise en oeuvre, ou à la surface de celle-ci, un quelconque insert, et, par exemple, un film polarisant.

En bref, l'invention permet avantageusement d'intervenir sur un grand nombre de paramètres pour obtenir les caractéristiques de toute nature, corrections ou autres, recherchées.

Bien entendu, la présente invention ne se limite d'ailleurs pas aux formes de mise en oeuvre décrites et représentées, mais englobe toute variante d'exécution.

Son champ d'application n'est pas non plus limité à celui d'une lentille ophtalmique comportant deux couches en matière minérale.

En effet, une seule couche en matière minérale peut convenir, au moins pour certaines applications.

Dans le cas de deux couches en matière minérale, seule l'une d'elles peut être l'objet d'une réduction d'épaisseur par usinage, l'autre présentant alors dès l'origine l'épaisseur désirée.

En outre, pour sa solidarisation à la couche en matière organique associée, une telle couche en matière minérale peut être collée à celle-ci, ladite couche en matière organique étant alors réalisée indépendamment.

D'une manière plus générale, le domaine d'application de l'invention n'est d'ailleurs pas limité à celui des seules lentilles ophtalmiques, mais s'étend à celui de tous les verres composites, par exemple plats.

1

## REVENDICATIONS

1. Procédé pour la réalisation d'un verre composite (10) du genre suivant lequel on assure d'abord la formation d'une ébauche stratifiée (14) comportant successivement une première couche en matière minérale (12) et une deuxième couche en matière organique (11'A,11'B), et on procède ensuite à un usinage de la surface externe (15'A,15'B) de la couche en matière minérale (12), caractérisé en ce qu'on donne à la couche en matière organique (12) de l'ébauche (14) une épaisseur au centre au moins égale à la moitié de celle désirée pour le verre composite (10) recherché, et en ce que l'on pousse l'usinage de la surface externe (15'A,15'B) de la couche en matière minérale (11'A,11'B) jusqu'à assurer à cette couche en matière minérale une réduction d'épaisseur notable désirée.

2. Procédé suivant la revendication 1, caractérisé en ce que l'on pousse l'usinage de la surface externe (15'A, 15'B) de la couche en matière minérale (11'A,11'B) jusqu'à assurer une réduction d'épaisseur de celle-ci au moins égale à la moitié de son épaisseur initiale.

3. Procédé suivant la revendication 1, caractérisé en ce qu'on pousse l'usinage de la surface externe (15'A,15'B) de la couche en matière minérale (11'A,11'B) jusqu'à assurer une réduction d'épaisseur de celle-ci au moins égale aux trois quarts de son épaisseur initiale.

4. Procédé suivant l'une quelconque des revendications 1 à 3, caractérisé en ce que l'ébauche stratifiée (14) de départ comporte une troisième couche (11'A,11'B), qui est

une couche en matière minérale, en sorte que la couche en matière organique (12) forme une couche intermédiaire disposée en sandwich entre deux couches en matière minérale (11'A,11'B).

5. Procédé suivant la revendication 4, caractérisé en ce qu'on assure, avec des réductions d'épaisseur semblables, l'usinage de la surface externe de l'une et de l'autre des couches en matière minérale (11'A,11'B).

6. Procédé suivant la revendication 4, suivant lequel la matière organique constitutive de la couche intermédiaire (12) de l'ébauche stratifiée (14) à former étant apte à être moulée, caractérisé en ce qu'on assure in situ le moulage de cette couche en matière organique (12) en prenant directement pour coquilles de moulage les couches en matière minérale (11'A,11'B) à lui associer, en sorte que lesdites couches en matière minérale (11'A,11'B) font office de coquilles de moulage perdues.

7. Verre composite, en particulier lentille ophtalmique, du genre comportant successivement une première couche en matière minérale (11A,11B), et une deuxième couche en matière organique (12), caractérisé en ce qu'il résulte de la mise en oeuvre d'un procédé conforme à l'une quelconque des revendications 1 à 3.

8. Verre composite, en particulier lentille ophtalmique, suivant la revendication 7, caractérisé en ce que, en application d'un procédé conforme à l'une quelconque des revendications 4 à 6, il comporte une troisième couche (11A,11B), qui est une couche en matière minérale, en sorte que la couche en matière organique (12) forme une couche intermédiaire disposée en sandwich entre deux couches en matière minérale (11A,11B).

9. Verre composite, en particulier lentille ophtalmique, suivant l'une quelconque des revendications 7, 8, caractérisé en ce que l'épaisseur au centre de sa couche en matière organique (12) est au moins égale à la moitié de son épaisseur au centre totale.

10. Verre composite, en particulier lentille ophtalmique, suivant la revendication 8, caractérisé en ce que les surfaces internes de ses couches en matière minérale (11A,11B) ont

des géométries différentes l'une de l'autre.

11. Verre composite, en particulier lentille ophtalmique, suivant la revendication 8, caractérisé en ce que ses couches en matière minérale (11A,11B) assurent des fonctions de filtration, et/ou de correction, et/ou de photochromisme, différentes l'une de l'autre.

FIG. 1

FIG. 2

FIG. 3A

FIG. 3B

FIG. 3C

FIG. 3D

FIG. 4

FIG. 5

FIG. 6

FIG. 7

FIG. 8

FIG. 9

FIG. 10

FIG. 11

Office européen
des brevets

**RAPPORT DE RECHERCHE EUROPEENNE**

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendication concernée | |
| A | US – A – 2 357 345 (MOULTON) | | B 29 D 11/00 |
| A | US – A – 3 471 358 (I.B. LUECK et al.) | | |
| A | US – A – 3 998 531 (MARZOUK) | | |
| A | FR – A – 1 522 002 (KIRK OPTICAL LENS) | | |
| D,A | FR – A – 2 407 898 (CORNING GLASS WORKS) | | |

– – – – –

DOMAINES TECHNIQUES RECHERCHES (Int. Cl. 3)

B 29 D 11/00

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 23-01-1981 | VAN THIELEN |

OEB Form 1503.1  06.78